# EUROPÄISCHE PATENTSCHRIFT

(11) **EP 1 144 156 B1**
(45) Veröffentlichungstag und Bekanntmachung des Hinweises auf die Patenterteilung: **23.04.2003**
(21) Anmeldenummer: 99962023.0
(22) Anmeldetag: 24.12.1999
(51) Int. Cl.: B24B 1/00

(54) **BREITSCHLEIFMASCHINE**
WIDE-WHEEL GRINDING MACHINE
RECTIFIEUSE LARGE

(30) Priorität: 24.12.1998 CH 256598; 28.04.1999 DE 19919318
(43) Veröffentlichungstag der Anmeldung: 17.10.2001
(73) Patentinhaber: Steinemann Technology AG, 9015 St. Gallen (CH)
(72) Erfinder: BUSENHART, Peter, CH-8542 Wiesendangen (CH); SANTIOLI, Andrea, CH-8157 Dielsdorf (CH); ALOI, Giuseppe Walter, CH-9443 Widnau (CH); FANKHAUSER, Fritz, CH-8203 Schaffhausen (CH)
(74) Vertreter: Ackermann, Ernst
(86) Internationale Anmeldenummer: CH9900626
(87) Internationale Veröffentlichungsnummer: WO00038882

(56) Entgegenhaltungen:
- DE-A- 19 745 233
- GB-A- 1 319 067
- US-A- 3 800 636
- US-A- 4 826 127
- US-A- 5 070 224
- US-A- 5 512 009

## Beschreibung

### Technisches Gebiet

Die Erfindung betrifft eine Breitschleifmaschine mit wenigstens einem, über einen Querträger an einem Maschinenständer befestigbaren Schleifkopf und einem Antriebsmotor für den Schleifkopf, der an einer Endseite des Querträgers angeordnet ist und an der anderen Endseite in Bezug auf den Maschinenständer eine lösbare Verbindung aufweist.

### Stand der Technik

Breitschleifmaschinen haben sich seit einigen Jahrzehnten zu einer eigenen Gattung von Schleifmaschinen etabliert. Es sind Schleifmaschinen von beachtlicher Grösse. Eine bekannte gattungsgemässe Lösung ist in dem DE-GM 94 14 952 beschrieben, worauf Bezug genommen wird. Die Höhe beträgt 1,5 bis 3 Meter und die Länge kann sich in Abhängigkeit der Zahl der Schleifköpfe von einem Meter bis zu vielen Metern erstrecken. Typisch ist vor allem die Breite der Maschine die von 1 bis über 3 Meter beitragen kann. Im Regelfall ist eine Breitschleifmaschine angepasst an das spezifische Bedürfnis, vor allem an die Breite der zu schleifenden Werkstücke. Werkstück um Werkstück wird kontinuierlich bzw. fortlaufend durch die Maschine geführt. In der Fachsprache wird deshalb bei grösseren Anlagen von einer Schleifstrasse gesprochen, welche Zu- und Abtransporte miteinschliesst. Ein typischer Anwendungsfall ist das Schleifen von Rohspanplatten. Dabei werden mehrheitlich die untere und die obere Fläche über die ganze Breite gleichzeitig geschliffen. Rohspanplatten haben unmittelbar nach der Verpressung eine Überdicke von 0,5 mm und mehr, und sollen nach dem Schleifprozess innerhalb einer Dickentoleranz von ± 1 - 3/100 mm gebracht werden. Die Dickentoleranz muss gleichmässig über die gesamte Fläche eingehalten werden. Für das fertig geschliffene Werkstück wird eine sehr hohe Oberflächenqualität verlangt. Der Kalibrierschliff als erste Schleifstufe bedingt leistungstarke Motoren für den Abtrag der recht grossen Materialmenge. Die entsprechend enorme Schleifarbeit bedingt bei Plattengrössen von mehreren m² höchste Genauigkeit und Stabilität der Maschine, vor allem auch des Maschinenständers. Bei Breitschleifmaschinen werden verschiedenste Schleifmittel angesetzt. Dies geht bereits von der Art des Schleifeingriffes hervor, sei es als Kalibrier-, Fein- oder Schuhschliff. Dafür werden in erster Linie Schleifbänder, Schleifwalzen, oder Bürstenwalzen eingesetzt. Neben dem erwähnten Plattenschleifen wird die gattungsgemässe Breitschleifmaschine in vielen anderen Bereichen eingesetzt, z.B. für Tischlerplatten, Türen, neben Hart- und Weichfaserplatten und Sperrholz und anderen Laminaten auch für Gipsfaserplatten, Zementfaserplatten, Bodenbelägen, ferner für Gummibeläge und Parkett-, Kork- und Strohplatten, insbesondere auch für den Metallschliff. Als eine Konsequenz aus der Vielfalt der unterschiedlichsten Einsätze kann der Hersteller von Breitschleifmaschinen, im Gegensatz etwa zu Werkzeugmaschinen nur ausnahmsweise zwei identische Maschinen herstellen. Jede Maschine ist gleichsam auf das spezielle Kundenbedürfnis hin massgeschneidert. Es wird versucht, einzelne Baugruppen innerhalb der Maschine, besonders die Schleifköpfe sowie die Führungs- und Antriebswalzen die Höhenverstellung so weit wie möglich zu standardisieren. Die bisherige Praxis ergab trotzdem als einen grossen Kostenfaktor die Maschinenmontage. Bevor die Breitschleifmaschine an den Kunden verschickt werden kann, wird diese mit Einschluss des Antriebes und der Steuerung beim Hersteller fertig zusammengestellt und mit einem Testlauf im Hinblick auf alle wichtigen Funktionen geprüft. Im Stand der Technik standen einer weitergehenden Standardisierung die grosse Vielfalt der Kundenwünsche im Wege. Darin eingeschlossen war in jedem Fall eine unverändert gute oder noch bessere Qualität in Bezug auf das Arbeitsergebnis. Die Praxis hat immer wieder gezeigt, dass Maschinenvibrationen ein wesentlicher Faktor für die Qualität des Arbeitsergebnisses sind. Die beiden dominanten Vibrationsquellen sind der Antrieb einerseits sowie der Ort des Schleifeingriffes anderseits. Eine dritte, nicht zu unterschätzende Vibrationsquelle sind Resonanzerscheingungen irgendwo in dem Bereich der Breitschleifmaschine. Jede Änderung des Konzeptes einer Breitschleifmaschine bringt wegen der beinahe Unmöglichkeit einer Vorausberechnung Überraschungen in der Frage der Maschinenstabilität. Jede Änderung bringt deshalb entsprechende Risiken. Bekannt sind ferner auch Vibrationswirkungen von Gebäudeteilen, besonders des Bodens auf dem die Maschinen abgestützt sind. Durch Massivbetonböden oder Fundamente kann schädlichen Vibrationen entgegengewirkt werden. Das DE-GM 94 14 952 zeigt eine Breitschleifmaschine mit wenigstens einem, über einen Querträger an einem Maschinenständer befestigbaren Schleifkopf und einem Antriebsmotor für den Schleifkopf, der an einer Endseite des Querträgers angeordnet ist, und an der anderen Endseite in Bezug auf den Maschinenständer eine lösbare Verbindung aufweist.

Die US-PS 5 070 224 bzw. die entsprechende DE-Druckschrift 38 41 314 zeigt eine Drahterodiermaschine, bei der der Portalständer aus Mineralguss bestehen kann. Es wird vorgeschlagen, die Portalbrücke als selbständige Baueinheit mit quaderförmigen Voll- und Hohlkörper zu formen. Die Portalbrücke ist austauschbar ausgebildet und mittels der Anschlussvorrichtungen an die Seitenwagen starr anschliessbar, um unterschiedliche Maschinenauslegungen zu ermöglichen. Der DE 38 41 314 lag die Aufgabe zugrunde, durch ein gegliedertes Baugruppensystem unterschiedlich ausgelegte selbständige und austauschbare Baugruppeneinheiten in der Weise kompatibel auszubilden, dass diese zu individuell an die Bearbeitungsaufgaben anpassbare Maschinenkonzeptionen abwandelbarer Dimensionierung zusammenge-stellt werden können, ohne dass die Starrheit und Schwingungsfestigkeit des Maschinengestells beeinträchtigt wird.

Die DE 37 34 895 schlägt ein Betongestell für eine Innenrundschleifmaschine vor, mit dem Ziel eine gleiche Masse und Steifigkeit wie ein entsprechendes Gussgestell zu erhalten. Das Betongestell wird in ihrer Längsrichtung als Doppel-T ausgebildet und in die Standfläche ein umlaufender Stahlrahmen in den Beton eingegossen. Bevorzugt werden dem Zementbeton Stahldrahtstücke mit einem Durchmesser von 0,4 bis 0,7 mm und einer Länge von ca. 30mm zugemischt. Von der Lösung gemäss DE 37 34 895 werden folgende Vorteile genannt:
- Die Masse des Betongestells ist etwa die gleiche wie bei einem vergleichbaren Gussgestell bei gleicher Steifigkeit durch die Ausführung als doppeltes Doppel-T.
- Das Betongestell hat etwa die doppelte Wärmekapazität bei drei- bis vierfacher Dämpfung gegenüber einem Gussgestell.
- Es fehlt jede aufwendige Bewehrung durch die gleichmässige Verteilung der Stahldrahtstücke im Beton.
- Die Gestaltung des Betongestells in Form eines doppelten Doppel-T schafft Hohlräume für die Aufnahme maschinenspezifischer Baugruppen.

Beton ist nachteilig, wenn später Änderungen am Maschinenkonzept notwendig sind und feste Verbindungen zwischen Maschinenständer und Baugruppen hergestellt werden müssen. Die unterschiedliche Wärmeausdehnung von Beton und Stahl kann bei speziellen Anwendungen mit grösseren Temperaturdifferenzen ein zusätzliches Problem ergeben.

### Darstellung der Erfindung

Aufgabe und Ziel der Erfindung war es nun, Mittel und Wege zu suchen, um für Breitschleifmaschinen ein vibrationsarmes Konzept zu entwickeln, das ohne Einbusse der Qualitätsstandards der Maschine, besonders der Maschinenstabilität eine kostengünstige Herstellung erlaubt. Ein wichtiges Teilziel dabei war ferner die Möglichkeit der individuellen Anpassbarkeit der Breitschleifmaschine an die Kundenwünsche.

Die erfindungsgemässe Breitschleifmaschine ist dadurch gekennzeichnet, dass der Maschinenständer zusammengesetzt ist aus einem Mineralgussmodul und dem Querträger, wobei der Querträger im Maschinenständer integriert und auf der Motorseite dauernd in dem Mineralgussmodul fest verankert und vorzugsweise als Metallprofil ausgebildet ist.

Von den Erfindern ist erkannt worden, dass im Falle der Breitschleifmaschine der Querträger, der den Schleifkopf trägt als ein Herzstück überhaupt dieser Gattung von Schleifmaschinen mit Vorteil in das Konzept des Maschinenständers integriert wird. Im Stand der Technik von Breitschleifmaschinen wurde der Stahlständer über Schraub- oder Schweissverbindungen mit dem Querträger verbunden. Die neue Erfindung schlägt demgegenüber eine ungleiche Paarung eines Mineralgussmodules mit dem Querträger in Metall vor, welche zusammen einen Maschinenständer bilden. Der Hauptvorteil liegt darin, dass die Hauptkräfte bzw. die Hauptvibrationen zwischen dem Mineralgussmodul sowie dem Querträger innerhalb einer damit gebildeten Baueinheit direkt in dem Nahbereich der Verbindung geschlossen bzw. gedämpft werden. Vom Querträger der die Schleifköpfe, trägt bzw. werden die Schwingkräfte direkt in den in Bezug auf Schwingungsdämpfung optimalen Mineralguss eingeleitet. Damit lassen sich Schwingungsprobleme verursacht durch Vibrationen nahe an der Quelle unterdrücken. Es kann so vermieden werden, dass schädliche Vibrationen an weitere Bauteilen übertragen und durch eine Rückwirkung die Schleifqualität verschlechtern. Der Mineralguss wird bevorzugt aus Harz, Härter sowie mineralische Füllstoffen hergestellt. Der Querträger wird bevorzugt als rohrförmiger Träger ausgebildet und weist wenigstens auf der Antriebsseite zur Massebildung eine Nichtmetallgussfüllung vorzugsweise eine Mineralgussfüllung auf. Querträger und Mineralgussmodul lassen sich zur Vibrationsdämpfung optimal ausgestalten und verbinden.

Auf eine ganze Anzahl besonders vorteilhafter Ausgestaltungen wird auf die Ansprüche 3 bis 16 Bezug genommen. Die Modulbauweise ist sehr interessant, und diese für einen, in einem grossen Bereich variierbaren Maschinenaufbau für die Kombination mit Mineralguss geradezu prädestiniert. Bevorzugt wird zumindest die Bedienungs- und Motorseite in Mineralguss hergestellt. Es handelt sich um die Zone in der die statischen und dynamischen Kräfte, insbesondere die Vibrationskräfte in den Ständer eingeleitet werden. Damit erlaubt die neue Erfindung äusserst wirksam durch die an sich bekannte Dämpfungswirkung eines Nichtmetallgusses Schwingungen aus dem Schleifvorgang und oft dadurch verursachte, jedoch unerwünschte Oberflächenmusterungen zu vermeiden. Die gestellte Aufgabe wird optimal gelöst, da selbst bei gesteigerter Durchsatzleistung die grösstmögliche Stabilität für die ganze Maschine ermöglicht wird. Die Dämpfung wird ohne Mehraufwand ganz nahe an die Quelle der Schwingungserzeugung angeordnet. Ein entscheidender Vorteil liegt darin, dass vom Ort der Entstehung der Vibration, diese so kurz wie möglich in eine möglichst grosse dämpfende Masse eingeleitet und weitgehend unschädlich gemacht werden.

Für mittelschwere Maschinen ist es wichtig, dass die Motor- und Bedienerseite mit Einschluss aller Eckbereiche aus Mineralguss hergestellt werden. Die Eckbereiche können mit einem Teil der Längswände einstückig hergestellt. Es ist aber auch möglich, dass ein Modul mit der Bedien- bzw. Motorseite gebildet ist, mit je ungleich langen Schenkeln bzw. Längsseiten. Mit der Modulbauweise wird sehr tief in den Herstellprozess der Maschine selbst eingegriffen. Die neue Erfindung ermöglicht einen Freiraum, insofern, als das Verhältnis Anteil Mineralguss sowie Metall bzw. Stahl wählbar und jederzeit neuen Anforderungen anpassbar ist. So können ein Maschinengehäuseunterteil und/oder ein Maschinengehäuseoberteil als Ganzes in Minealguss gegengleich hergestellt werden. Zur Erleichterung der Montage, aber auch zur Erhöhung der zulässigen Belastung können an den Einzelmodulen Präzisionsarbeitsstellen an- bzw. eingegossen werden.

Die neue Erfindung stützt sich ferner ab auf die bewährten mechanischen Baugruppen, da diese für die Praxis schon einen hohen Reifegrad haben und den Kundenbedürfnissen entsprechen. Das "Legospiel" kann jedoch schon auf der Ebene des Ständerbaues bzw. Maschinengehäusebaues ansetzen. Das Maschinengehäuse selbst kann modular auf Nichtmetallguss-Modulen aufgebaut werden. Dies gilt bereits bei der einfachsten bzw. leichteren Breitschleifmaschine mit nur einem Schleifkopf. Die neue Lösung schliesst nicht aus, dass ein einzelnes Modul für zwei Schleifköpfe hergestellt wird. Bevorzugt wird jedoch das Konzept: pro Schleifkopf ein Gehäusemodul. Daraus lässt sich die ganze Maschine in der Art eines Bausatzes für beliebige Kundenwünsche zusammenstellen. Wichtig ist dabei, dass für die mechanischen Bauteile passende Befestigungsstellen an dem Maschinenständer vorgesehen werden, so dass die Montage in kürzest möglicher Zeit durchführbar ist. Eine grössere Maschinen kann aus mehreren gegossenen Einzelteilen in hoher Präzision, gleichsam "zusammengesteckt" werden. Die Arbeitskomponenten werden an bereits präzise angeordneten Verbindungsstellen hinzugefügt. Aus dem gesagten ergibt sich die Möglichkeit der Baugruppenmontage. Die Baugruppenmontage erlaubt jede Baugruppe räumlich getrennt zu fertigen, wobei die verschiedenen, mechanischen Baugruppen an sich den hohen Standardisierungsgrad behalten können.

Die einfachste Konkretisierung der neue Lösung verwendet wenigstens ein Mineralgussmodul. Dabei wird nur eine Seite des Werkstückes geschliffen. Auf der Gegenseite kann eine Stützwalze mit einem Rahmenteil aus Stahl entsprechend dem Stand der Technik oder als Modul verwendet werden. Sollen beide Seiten des Werkstückes gleichzeitig geschliffen werden, dann wird vorgeschlagen, dass sowohl das Unterteil wie das Oberteil aus zwei im wesentlichen gegengleichen Modulen gebildet ist. Sinngemäss weisen Mehrkopfmaschinen gemäss der Zahl der Schleifköpfe formgleiche Module auf, die zusammen einen entsprechend grossen Maschinenständer bilden. Darauf lässt sich eine ganze Schleifstrasse aufbauen. Die Module können ohne Zwischenräume zu einer Grossmaschine bzw. Schleifstrasse zusammengefügt oder z.B. auch zweiteilig aufgebaut werden. Ein erster Teil kann die Schleifköpfe für den Kalibrierschliff und ein zweiter Teil die Schleifköpfe für den Feinund Schleifschuhschliff aufweisen.

Ein Modul bildet eine massivgliedrige Quaderform mit dominant ebenen Begrenzungsflächen. Die ebenen Begrenzungsflächen ergeben nicht nur einen besonderen Effekt, sondern genügen im Sinne der Sanitation und Reinigung höchsten Anforderungen. Es entstehen dadurch die kleinst mögliche Haft - oder Auflageflächen für Schleifstaub- und Schmutz. Ebene Flächen sind leichter zu reinigen. Die beiden Längsseitenwände werden bevorzugt gegengleich ausgebildet, mit brückenkopfartigen Zwischenstützen. Das Einzelmodul kann einstückig, also aus einem Guss, im wesentlichen aus massiv gestalteten Teilementen, insbesondere mit nutzbaren, leitungsartigen Hohlräumen gebaut werden. In den Hohlräumen werden gezielt rohrförmige Einlagen gebildet, in welche z.B. pneumatisch/hydraulische oder elektrische Leitungen und Signalleitungen vollkommen geschützt einlegbar sind. Hohlräume können ferner für Luftführung benutzt werden. Mit den äusseren Abmessungen sowie allfälligen Hohlräumen kann die örtliche Masse und damit das Verhalten in Bezug auf eine Schwingungsdämpfung, auch im Sinne von Gegenmassen, gewählt werden.

Ein weiterer wichtiger Vorteil ergibt sich, wenn in bzw. am Einzelelement Präzisionsmontagestellen fest eingegossen bzw. angegossen sind. Damit ist die wichtigste Grundlage für eine präzise Schnellmontageweise gegeben. Das Modul muss nach dem Giessen in den meisten Fällen weder von Hand noch maschinell zusätzlich bearbeitet werden. Für die industrielle Fertigung ergibt sich daraus eine grosse Zeitersparnis. Bei Mineralguss besteht, durch den hohen Mineralanteil besonders für das bevorzugte Kaltgiessverfahren ein vernachlässigbarer Schwund nach dem Giessprozess, so dass entsprechend genau eingesetzte Präzisionsmontagestellen die Präzision garantieren. Es wird ferner vorgeschlagen, für je einen Montagesatz für senkrechte Stützsäulen zwischen zwei Modulen, für Führungsrollenbausätze sowie für einen Hauptquerträger für einen Schleifkopf in dem Einzelmodul entsprechende Montagestellen fest einzugiessen. Die Schleifkopf-Module weisen eine einheitliche Höhe auf. Dagegen werden die Schleifkopf-Module mit unterschiedlichen Längen und/oder unterschiedlichen Breiten ausgebildet. Die Standardisierung der Höhe ist wichtig, da sonst die beliebige Zusammensetzbarkeit beeinträchtigt wird. Im Regelfall wird für das Einzelmodul eine Standardbreite angestrebt. Die Standardbreite liegt in einer Querebene, rechtwinklig zu der Breitseite der ganzen Maschine. Sehr wichtig ist die Möglichkeit der Längenvariierung der Einzelmodule. Die Länge des Modules entspricht der Breite der Maschine. In jedem Anwendungsgebiet werden unterschiedliche Bearbeitungsbreiten Schleif- bzw. verlangt, z.B. vom 1, 1.5, 2, 2.5, 3 Metern oder mehr. Die Breite der Maschine ist nicht nur aus räumlichen Gegebenheiten aus dem spezifischen Einsatz gegeben, sondern schlägt sich stark im Preis einer ganzen Maschine nieder. Die Maschinenbreite muss, wenn auch in Sprüngen, variierbar sein. Es ist meistens nachteilig, wenn bei der Einführung einer neuen Idee, diese gleichsam ideologiemässig angewendet wird. Es ist deshalb vorgesehen, dass die Schleifkopf-Gehäusemodule in Kombination mit Ständerteilen in Stahlkonstruktion verwendbar sind.

Bevorzugt wird ein Mineralguss, bestehend aus Harz, Härtern sowie mineralischen Füllstoffen hergestellt. Es handelt sich hierbei um ein Gussmaterial, das an sich bereits bekannt ist und auf dem Gebiet des Werkzeugmaschinenbaues anstelle der früher verwendeten schweren Graugussteile eingesetzt wird. Mineralguss hat ein ideales Schwingungsdämpfungsverhalten, was im Hinblick auf die Schwingungen aus dem Schleifprozess gegenüber dem bisherigen Stahlständern einen grossen Fortschritt bringt. Anderseits ist Mineralguss leichter als eine entsprechende Stahl- oder Graugusslösung. Es kann jedoch bei grossen Maschinen von Vorteil sein, den Gewichtsvorteil gerade nicht auszunutzen. Im Gegenteil, die Gehäusemodule können beliebig massiv gebaut werden, so dass etwa ein Gleichgewicht besteht zu Ständerteilen in Stahlkonstruktion des Standes der Technik.

### Kurze Beschreibung der Erfindung

Die Erfindung wird nun an Hand von Ausführungsbeispielen mit weiteren Einzelheiten erläutert. Es zeigen:
- die Figur 1: einen einzelnen Maschinenständer mit einem Mineralgussmodul und fest verankertem Querträger;
- die Figur 2: einen Maschinenständer entsprechend Figur 1, jedoch mit Längswänden in Metall;
- die Figur 3: einen ersten Montageschritt für eine Breitschleifmaschine mit einer Baugruppe für Führungsrollen;
- die Figur 4: einen zweiten Montageschritt mit zwei Maschinenständer sowie zwei Baugruppen für Führungsrollen;
- die Figur 5: einen dritten Montageschritt mit zwei übereinander angeordneten und durch verstellbare Stützsäulen gehaltenen Schleifköpfen;
- die Figur 6: die Antriebsbaugrupppen aus Sicht gemäss Pfeil V;
- die Figur 7a: eine zusammengebaute Breitschleifmaschine für doppelseitigen Schliff mit je zwei Schleifköpfen, von der Bedienseite betrachtet;
- die Figur 7b: die Figur 7c von der Rückseite bzw. Antriebsseite betrachtet jedoch ohne Antriebsmotoren;
- die Figur 8: eine Kombination von Mineralgussmodul-Unterteil mit Stahkonstruktion-Oberteil;
- die Figur 9: eine Kombination Mineralgussmodul-Oberteil und Stahlkonstruktion-Unterteil;
- die Figuren 10a bis 10h: verschiedene Modulkombinationen.

### Wege und Ausführung der Erfindung

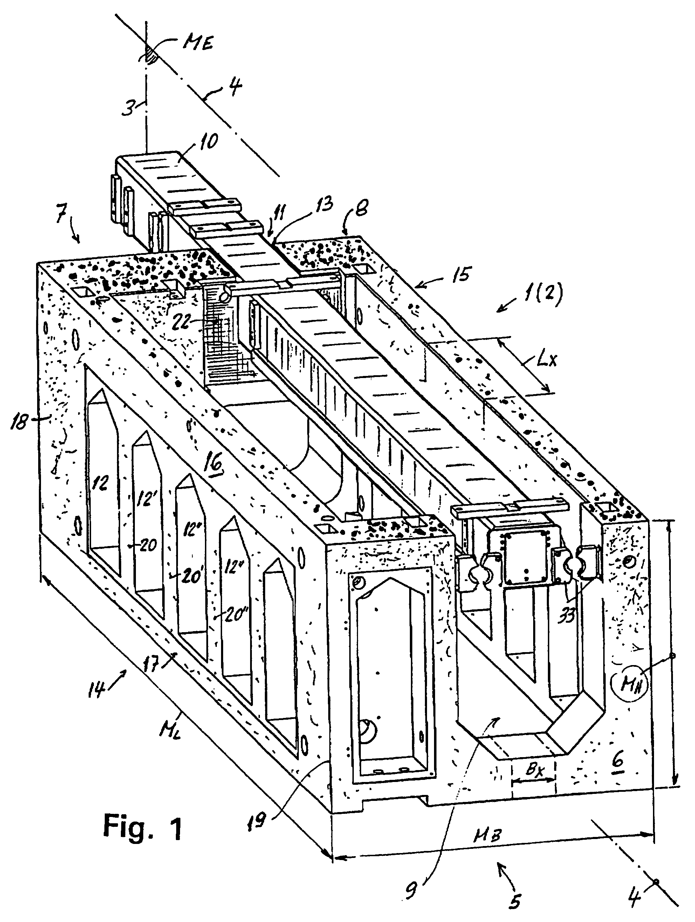

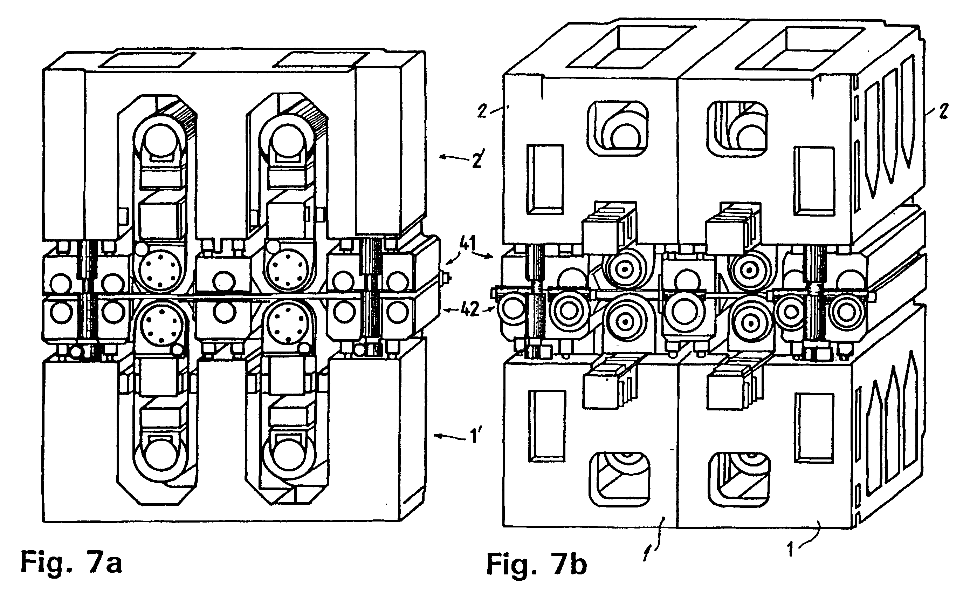

In der Folge wird nun auf die Figur 1 Bezug genommen, welche einen Maschinenständer 1 (2) darstellt. Das Bezugszeichen 2, in Klammer, steht für einen zweiten Maschinenständer, der gleichsam auf dem Kopf steht und für das oberseitige Schleifen von Platten bestimmt ist (Figur 7). Das Ausführungsbeispiel von Figur 1 ist bezüglich einer Mittelebene ME, welche durch die Mittellinien 3 und 4 definiert ist, symmetrisch. Der Vorteil der Symmetrie liegt darin, dass die Ständerunterteile 1 und die Ständeroberteile 2 als zwei identische Module hergestellt werden können, nur dass das obere um 180° gedreht, oder mit anderen Worten auf den Kopf gestellt ist. Für beide Module wird damit nur eine Giessform benötigt. Entsprechend können die Formkosten tief gehalten werden. Das dargestellte Mineralgussmodul präsentiert sich als langgezogene Quaderform. Es handelt sich um eine mittelbreite Maschine von etwa 2 Metern Schleifwalzenlänge. Bei ganz kurzen Schleifwalzen von etwa 1 Meter Länge ergibt sich eher eine Würfelform, da entsprechend die Abmessung M_{L} im Verhältnis zur dargestellten Lösung nur die Hälfte beträgt. Bevorzugt wird eine einheitliche Höhe M_{H}. Dagegen ist bei der zur Zeit gewählten konkreten Ausführung die Modulbreite M_{B} veränderbar vorgesehen was mit Bx, entsprechend einen variierende Zwischenstücke sichergestellt wird. Sinngemäss gilt dies auch bezüglich der Modullänge mit einem variierenden Längenteil Lx. Der Pfeil 5 gibt die Blickrichtung auf die Vorderfront 6, und der Pfeil 7 auf die Antriebs- oder Rückfront 8 bzw. Antriebsseite. Die Vorderfront 6 ist die Bedienseite der Breitschleifmaschine. Auf der Bedienseite sind verschiedene Zugangsöffnungen vorgesehen. Die Hauptöffnung ist eine grosse, mittlere Aussparung 9, durch welche der Bandwechsel von Endlosschleifbändern erfolgt. Die Rückfront weist eine Aussparung 11 auf, in der ein Querträger 10 für einen Schleifkopf geführt und fest verankert ist. Die dargestellten Öffnungen 12, 12', 12" usw. haben primär eine konstruktive Funktion für den Maschinenständer 1 (2). Vordergründig wird durch diese Öffnungen (12) Giessmaterial gespart. Die gezeigte Materialverteilung hat noch eine weitere Funktion, nämlich für die Anordnung von nutzbaren, leitungsartigen Hohlräumen. Hierfür können alle Materialanordnungen benutzt werden, sowohl auf der Vorderfront wie der Rückfront, ferner die beiden Längswandteile 14 und 15. Beim gezeigten Beispiel weisen die beiden Längswandteile durchgehend einen oberen Balken 16 sowie einen Bodenbalken 17 auf, welche über Eckteile 18, 19 mit der Vorderfront 6 resp. Rückfront 8 im gezeigten Beispiel einteilig, als ein Gussstück, verbunden sind. Im mittleren Bereich weisen die beiden Längswandteile 14 und 15 Mittelstützen 20, 20' usw. auf. Der Mineralguss ist in Bezug auf die Rohmaterialien auf der Basis von speziellen Kunststoffen zusammengestellt. Die Verankerung des Querträgers 10 in dem Mineralgussmodul erfolgt vorzugsweise direkt beim Giessprozess oder durch eine Leimverbindung 13, welche zur Erhöhung der Verbindungsflächen mit einer Stützplatte 22 vergrössert ist. Das Mineralgussmodul der Figur ist einstückig gegossen, wie mit Punkten (als mineralische Bestandteile) angedeutet ist. Der Querträger 10 ist dagegen aus Metall, bzw. einem Metallhohlprofil, das vorzugsweise mit Masse gefüllt wird. Wichtig ist, dass der Verbindungsbereich des Querträgers 10 mit dem Mineralguss gefüllt ist, zur Optimierung der Vibrationsdämpfwirkung. Der Querträger kann auch vollständig gefüllt werden, vorzugsweise mit Mineralguss.

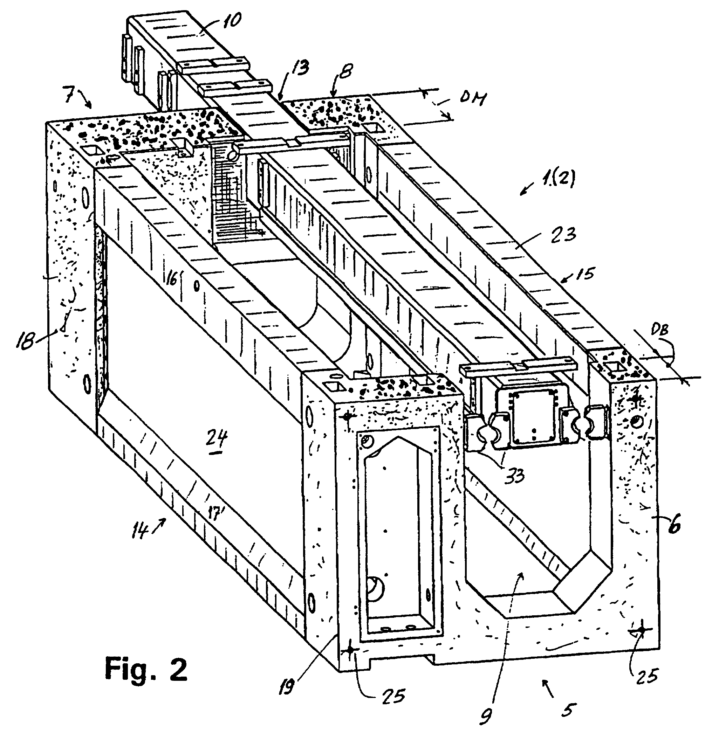

Die Figur 2 zeigt eine leicht abgewandelte Ausgestaltung des Maschinenständers. Der Unterschied liegt darin, dass der Maschinenständer in sich modulartig unterteilt ist, in drei markante Elemente. Die Bedien- und Motorseite sind mit allen Eckteilen in Mineralguss, die beiden Längsseiten 23 und 24 sind dagegen wie die Querträger in Stahl hergestellt. Dabei liegt es auf der Hand, dass die Stahlprofilteile teilweise oder ganz vollgegossen werden können, vorzugsweise mit dem selben oder einem ähnlichen Mineralguss. Die Verbindung der trogähnlichen Form kann durch Schrauben 25 erfolgen. Mit DM ist die entsprechende Dickenabmessung auf der Motorseite und mit DB. Die Dickenabmessung auf der Bedienseite bezeichnet. DM ist deutlich grösser. Dies gestattet die doppelte Vibrationseinwirkung aus dem Schleifprozess einerseits sowie dem Antriebskräften anderseits örtlich besser abzufangen. Die Figur 1 mit einem vollständigen Mineralgussmodul ist eher für grösste Maschinen, eine Lösung gemäss Figur 2 für leichtere Maschinen konzipiert. In beiden Fällen werden nicht nur örtlich die Vibrationskräfte gedämpft, sondern auch komplexe, grösser räumlich wirkende Vibrationserscheinungen z.B. von Antriebsdrehmoment und Schleifband gerade durch die trogartige Form besonders wirksam unschädlich gemacht.

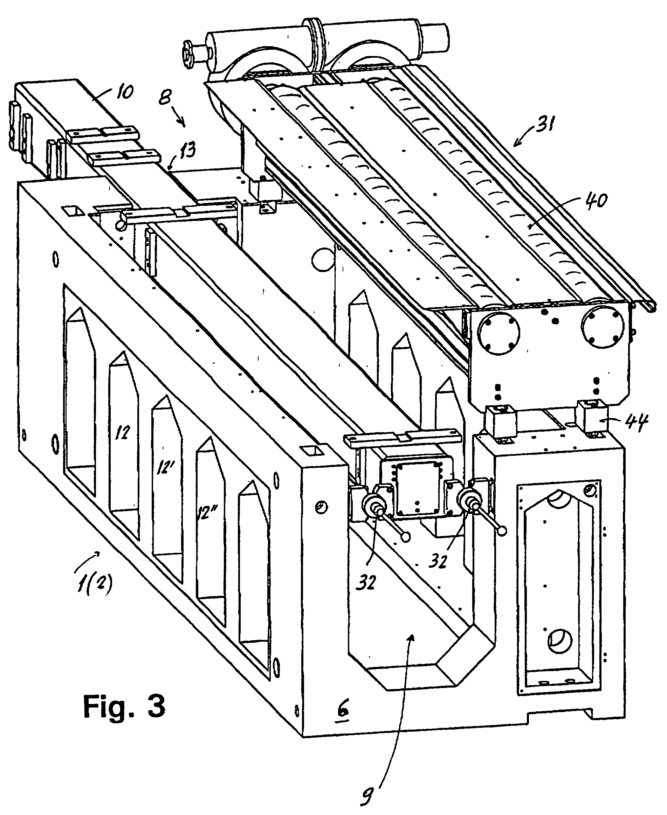

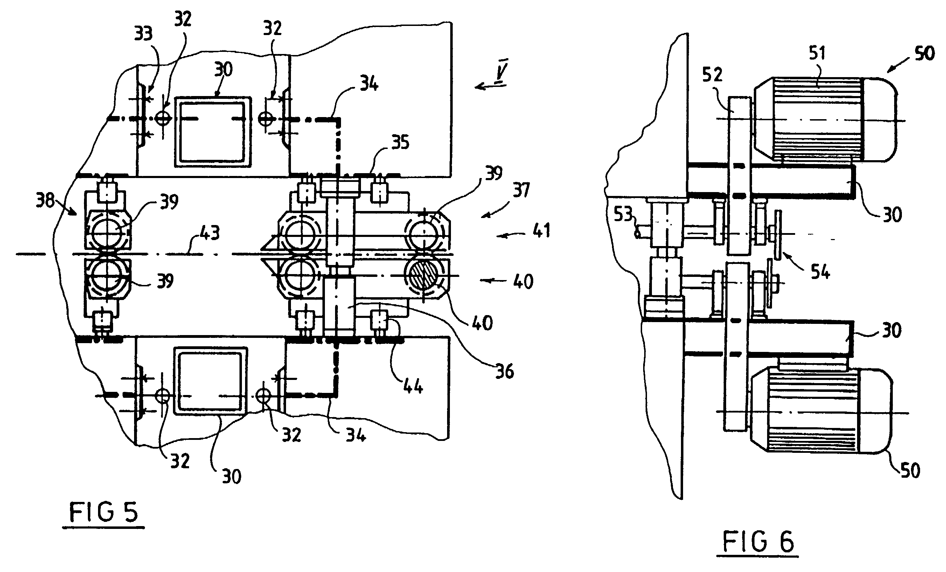

Die Figur 3 zeigt den in den Figuren 1 und 2 fertig erstellten Maschinenständer als ersten Montageschritt z.B. mit dem Einbau einer Führungs- und Vorschubeinheit 31. Der Querträger 10 ist in dem Bereich der Rückfront 8 fest in dem Gehäusemodul 1 (2) verankert und bildet auf beide Seiten einen frei auskragenden Arm. In dem Bereich der Vorderfront 6 wird der Hauptquerträger 30 für den Betrieb mit beidseits je einer Ankerschraube 32 (Figur 5) mit dem Gehäusemodul 1 (2) verbunden. Die Ankerschrauben 32 müssen bei jedem Bandwechsel gelöst und vollständig weggenommen werden, damit das Endlosband nach aussen weggezogen und wieder eingeführt werden kann. Die Ankerschrauben haben den Zweck, den Querträger vorne zu stützen und an der betreffenden Stelle die U-förmigen Öffnung bzw. Aussparung 9 des Gehäusemodules 1,2 kräftemässig wieder zu schliessen. Das Mineralgussmodul 1 (2) wird für diesen Zweck mit einer eingegossenen Ankerstelle 33 bevorzugt aus Metall ausgerüstet, so dass auch auf der Bedienseite eine optimale Vibra-tionsdämpfung erzielt wird.

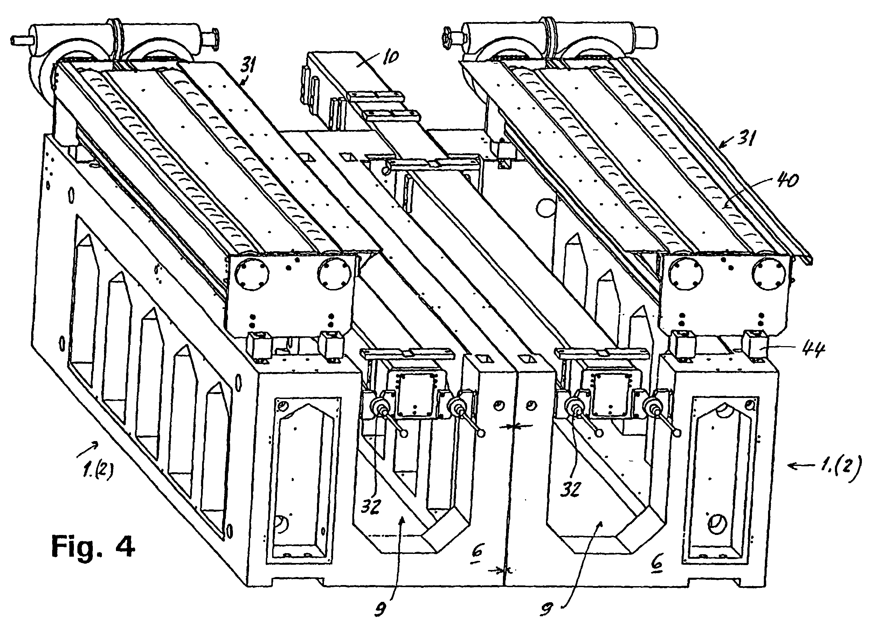

Die Figur 4 zeigt zwei Module 1, welche zu einer Baueinheit fest verbunden sind. Es handelt sich um eine blósse Verdoppelung gegenüber der Figur 4. In der Folge wird auf die Figuren 5 und 6 Bezug genommen, welche bereits einen weiteren Montageschritt nämlich das Übereinandersetzen von zwei Ständern darstellt. Strichpunktiert mit der Bezugsziffer 34 ein Ankerbügel 34 angedeutet, der bevorzugt fest in den Mineralguss eingegossen wird. Auf diese Weise kann ein kreisförmiger Kräfteschluss die Hauptkräfte aus dem Schleifvorgang auf dem kürzesten Weg hergestellt werden, da die Verbindung bevorzugt direkt auf eine an- bzw. eingegossene Ankerplatte 35 sowie höhenverstellbare Stützsäulen 36 hergestellt wird. Die Stützsäulen 36 können mit einer motorisch verstellbaren Spindel ausgerüstet sein. Die höhenverstellbaren Stützsäulen dienen neben der reinen Tragfunktion in erster Linie für die Einstellung der Spaltweite für die Schleifmittel. Ankerbügel 34, Hauptquerträger 30 mit Ankerschrauben 32 sowie die Stützsäulen 36 bilden für jedes Gehäusemodul 1 resp. 2 ein Joch, wobei die zwei gegenüberliegenden Joche über die Stützsäulen 26 verbunden sind. Die Breitschleifmaschine weist ferner auf der Plattenzuführseite eine erste Führungs- und Vorschubeinheit 37 auf, sowie eine zweite Führungseinheit 38, auf der Plattenabführseite. Beide Führungs- und Vorschubeinheiten 37 resp. 38 sind Baugruppen und weisen Föhrungswalzen 39 auf, wobei zumindest eine Walze als angetriebene Vorschubwalze 40 ausgebildet ist. Die ganzen Führungs- und Vorschubeinheiten bestehen aus einer oberen Baugruppe 41 sowie einer unteren Baugruppe 42, wobei die je entsprechenden Führungswalzen Vorschubwalzen eine stabile Längs- und Querführung ergeben. Bei der ersten Inbetriebnahme oder nach längeren Betriebszeiten müssen die Führungswalzensätze in der Höhe genau justiert werden, damit die Plattenführungen genau Plan parallel entsprechen einer mittleren Schleifebene 43 und in eine optimale Lage zu den Schleifmitteln liegen. Zu diesem Zweck ist jeder Führungswalzensatz über einstellbare Elemente 44 verankert. Jeder Schleifkopf hat eine eigene Antriebsbaugruppe 50, wie in Figur 6 gezeigt ist. Diese besteht aus einem Antriebsmotor 51, einem Riemen 54 sowie einer Lagerstelle 52, ferner einer Antriebswelle 53 besteht.

Die Figuren 7a und 7b zeigen die Situation, wenn alle wichtigen Baugrppen einer 4-Kopfmaschine fertig montiert sind. Die Figur 7a ist die Ansicht der Bedienseite, die Figur 7b die Ansicht der Antriebsseite, jedoch noch ohne die Antriebsbaugruppen. In Figur 7a weist, im Gegensatz zu der Figur 7b in der Mitte der zwei auf gleicher Höhe liegenden Gehäusemodulen keinen Trennstrich auf. Damit soll nur angedeutet werden, das bei Bedarf auch Doppelmodule hergestellt werden können. Als Schleifmittel kommen wie eingangs erwähnt ist, alle bekannten Lösungen des Standes der Technik in Frage. Es wird hierfür besonders auch auf das deutsche Gebrauchsmuster der Anmelderin G 94 14 952.6 Bezug genommen, welches als integrierender Bestandteil des Anmeldetextes erklärt wird.

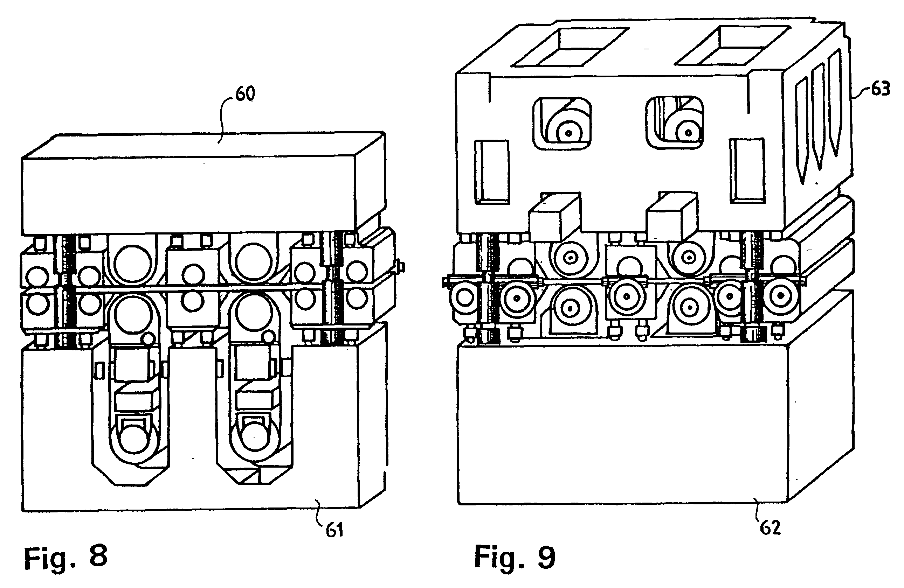

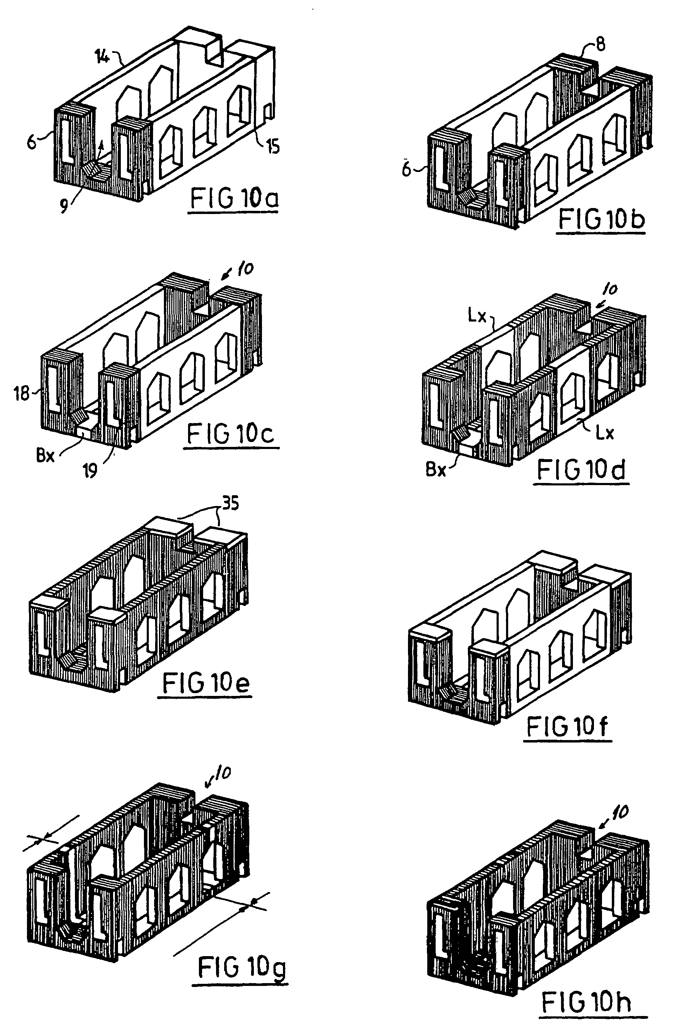

Die Figuren 8 und 9 zeigen je eine kombinierte Ausführung. Bei der Figur 10 ist das gesamte Maschinenunterteil 61 sinngemäss zu der Figur 7a aufgebaut. Das Maschinenoberteil 60 kann in traditioneller Stahlkonstruktion gebaut werden, z.B. mit Schleifwalzen als obere Schleifköpfe. Gerade umgekehrt ist die Figur 9 konzipiert. Das Maschinenunterteil 62 ist in bekannter Stahlkonstruktion und das Maschinenoberteil 63 gemäss der neuen Erfindung als Gehäusemodul hergestellt. Damit soll nur aufgezeigt werden, dass die neue Modulbauweise keine begrenzende Funktion hat im Hinblick auf eine Variantenvielfalt. Besonders bevorzugt werden die Nichtmetallguss-Module aus den Mineralgusskomponenten: Härter, Harz und einem mineralischen Füllstoffe hergestellt. Dies ergibt eine temperaturstabile Basis für eine optimale Funktion der Breitschleifmaschine mit einer sehr grossen Dampfwirkung für Schwingungen an dem Schleifprozess. Die verwendeten Rohstoffe sind praktisch ein inertes Material, zusammengesetzt aus Kiselkalk und einem geringen Anteil Epoxid-Bindemittel und sind beständig gegen Öle, Kühlemulsionen und viele Chemikalien. Die Temperaturausdehnungswerte sind denjenigen von Stahl und Grauguss ähnlich, jedoch bei ausgezeichneter Temperaturstabilität. Die Schwingungsdämpfung ist ca. 10 mal besser als bei Grauguss. Die Module erhalten aber als Kaltgiesswerkstoff in den Giessformen ihre endgültige Gestalt. Im Kaltgiessverfahren kann die Mehrzahl der Leitungen miteingegossen werden, genau so Präzisionsverbindungsteile und Führungen, Auflageplatten, Jochelemente für den Hauptkraftfluss usw. Es ergibt sich daraus ein enormer Zeitgewinn für die Montage.

Die Figuren 10a bis 10h zeigen verschiedene Ausgestaltungen für die Mineralgussmodule, jeweils dunkel eingefärbt ist das in Nichtmetallguss hergestellte Modul. Das Modul besteht als Ganzes vorzugsweise aus Mineralguss und übernimmt eine Tragfunktion vor allem aber eine Dämpfungsfunktion. Bei der Figur 10a ist die ganze Vorderfront 6 als Nichtmetallgussstück und in der Figur 10b sowohl die Vorderfront 6 wie die Rückfront 8 z.B. in Mineralguss hergestellt. Damit soll nur angedeutet werden, dass sowohl das eine wie das andere in Mineralguss hergestellt sein kann. Der Grund für diese drei Variationen liegt in der Möglichkeit der Herstellung von Speziallösungen. Der Guss bedingt eine minimale Standardisierung. Damit nicht für jede Maschine eine neue Giessform hergestellt werden muss, wird gemäss der Figur 10c ein Breitvariationsstück Bx vorgeschlagen. Die beiden Längswandteile 14 und 15 sind in herkömmlicher Stahlkonstruktion, dagegen sind die Eckteile 18 und 19 in Mineralguss gezeigt. Eine weitere, interessante Ausgestaltung zeigt die Figur 10d bei der neben dem Stück Bx auch zwei Einsätze Lx in den Längswandteilen in Metall hergestellt sind. Die Figur 10d gestattet damit nicht nur die grösstmögliche Modulstandardisierung, sondern auch die grösst mögliche Nutzung des Mineralgussanteiles für die Module. Dadurch, dass nicht nur die Eckteile 18 und 19 sondern zusätzlich auch ein Stück der Längswandteile einstückig in Mineralguss hergestellt sind, wird die gesamte Steifigkeit sehr hoch. In den Figuren 10e und 10f und sind zwei Beispiele für den Einsatz von Ankerplatten 35 gezeigt, welche fest in das entsprechende Modul an- bzw. eingegossen sind. Die Figur 12g zeigt eine weitere Ausgestaltungsmöglichkeit mit einem zweiteiligen Modul in unsymmetrischer Bauweise. Die Schnittstelle ist beidseits mit zwei Pfeilen dargestellt. Die Figur 10h zeigt ein Gehäuseteil, das als Ganzes in Nichtmetallguss hergestellt ist.

Allen gezeigten Beispielen ist gemeinsam, dass vor allem dort Mineralguss verwendet wird, wo auch die Kräfte aus den Schleifköpfen direkt an den Ständern bzw. das Gehäuse eingeleitet wird. Damit wird bei dem Schleifprozess eine bessere Oberfläche an dem zu bearbeitenden Werkstück oder Platte durch ein dämpfendes Material für den Ständer erreicht. Die zugrundegelegte Aufgabe einer kostengünstigen Herstellung wird ohne Einbusse in der Qualität und der Vielfalt der spezifischen Kundenaufgabe gelöst.

## Patentansprüche

1. Breitschleifmaschine mit wenigstens einem, über einen Querträger (10) an einem Maschinenständer (1, 2) befestigbaren Schleifkopf und einem Antriebsmotor (50, 51) für den Schleifkopf, der an einer Endseite des Querträgers (10) angeordnet ist, und an der anderen Endseite in Bezug auf den Maschinenständer (1, 2) eine lösbare Verbindung aufweist,
**dadurch gekennzeichnet,**
**dass** der Maschinenständer (1, 2) zusammengesetzt ist, aus einem Mineralgussmodul und dem Querträger (10), wobei der Querträger (10) im Maschinenständer (1, 2) integriert und auf der Motorseite dauernd in dem Mineralgussmodul fest verankert und vorzugsweise als Metallprofil ausgebildet ist.

2. Breitschleifmaschine nach Anspruch 1,
**dadurch gekennzeichnet,**
**dass** der Querträger (10) als rohrförmiger Träger ausgebildet ist, und wenigstens auf der Antriebsseite zur Massebildung eine Nichtmetallgussfüllung, insbesondere eine Mineralgussfüllung aufweist, zur bestmöglichen Vibrationsdämpfung durch den Verbund von Maschinenständer (1, 2) und Querträger (10).

3. Breitschleifmaschine nach Anspruch 1 oder 2,
**dadurch gekennzeichnet,**
**dass** das Mineralgussmodul motorseitig in Bezug auf die übrigen Ständerteile zur Erhöhung der Massebildung örtlich massiver ausgebildet ist.

4. Breitschleifmaschine nach einem der Ansprüche 1 bis 3,
**dadurch gekennzeichnet,**
**dass** je ein Maschinenständerunterteil (61, 62) und ein Maschinenständeroberteil (60, 63) gegengleich ausgebildet sind.

5. Breitschleifmaschine nach einem der Ansprüche 1 bis 4,
**dadurch gekennzeichnet,**
**dass** das Mineralgussmodul als Ganzes die Motorseite, die Bedienseite und die Längsseite umfasst und einen einstückigen Mineralgusskörper bildet.

6. Breitschleifmaschine nach Anspruch 5,
**dadurch gekennzeichnet,**
**dass** ein Ständerunterteil (1) und ein Ständeroberteil (2) zwei gegengleiche Mineralgussmodule aufweist.

7. Breitschleifmaschine nach einem der Ansprüche 1 bis 4,
**dadurch gekennzeichnet,**
**dass** die Motor- und die Bedienseite des Maschinenständers (1, 2) je als Mineralgussmodul ausgebildet und mit zwei Längswänden (14, 15) verbunden sind, wobei die Längswände (14, 15) in Metall oder in Mineralguss hergestellt sind.

8. Breitschleifmaschine nach einem der Ansprüche 1 bis 4,
**dadurch gekennzeichnet,**
**dass** der Maschinenständer (1, 2) in sich modular aufgebaut ist und wenigstens ein Teilmodul in dem Bereich der Bedienungs- und/oder Motorseite aus Mineralguss hergestellt ist.

9. Breitschleifmaschine nach Anspruch 8,
**dadurch gekennzeichnet,**
**dass** je ein Modul mit der Bedien- bzw. Motorseite gebildet ist, mit je ungleich langen Schenkein bzw. Längsseiten (23, 24).

10. Breitschleifmaschine nach Anspruch 1 bis 9,
**dadurch gekennzeichnet,**
**dass** die Mineralgussmodule eine einheitliche Höhe aufweisen und mit unterschiedlichen Längen und/oder unterschiedlichen Breiten giessbar sind.

11. Breitschleifmaschine nach Anspruch 1,
**dadurch gekennzeichnet,**
**dass** die Längsseitenwände (23, 24) eines Maschinenständers (1, 2) in Mineralguss gegengleich mit brückenkopfartigen massiv gestalteten Zwischenstützen (20, 20', 20"), mit nutzbaren, leitungs-artigen Hohlräumen ausgebildet sind.

12. Breitschleifmaschine nach Anspruch 1,
**dadurch gekennzeichnet,**
**dass** sie in Kombination Mineralgussmodule und Maschinenständer (1, 2) in Stahlkonstruktion aufweist.

13. Breitschleifmaschine nach einem der Ansprüche 1 bis 12,
**dadurch gekennzeichnet,**
**dass** die Mineralgussmodule aus Harz, Härtern sowie mineralischen Füllstoffen hergestellt sind.

14. Breitschleifmaschine nach einem der Ansprüche 1 bis 13,
**dadurch gekennzeichnet,**
**dass** die Mineralgussmodule massiv gebaut sind, so dass etwa ein Gleichgewicht besteht zu Ständerteilen in Stahlkonstruktion des Standes der Technik.

15. Breitschleifmaschine nach Anspruch 1,
**dadurch gekennzeichnet,**
**dass** sie in der Art eines Legobausatzes modular aufgebaut ist, mit festen Modulbausteinen aus Mineralguss, ferner mechanischen Metallbauteilen, und Baugruppen für Führungsrollen (39, 40), oder Stützwalzen sowie den senkrechten, verstellbaren Stützsäulen (36).

16. Breitschleifmaschine nach Anspruch 1,
**dadurch gekennzeichnet,**
**dass** eine Mehrkopfmaschine entsprechend der Zahl der Schleifköpfe formgleiche Module aufweist, wobei die Mineralgussmodule eine massivgliedrige Quaderform mit dominant ebenen Begrenzungsflächen aufweisen.

## Claims

1. Wide grinding machine with at least one grinding head which can be fastened via a transverse beam (10) to a machine stand (1, 2) and with a drive motor (50, 51) for the grinding head, which is arranged at an end face of the transverse beam (10) and. at the other end with respect to the machine stand (1, 2) has a detachable connection, **characterised in that** the machine stand (1, 2) comprises a cast mineral module and the transverse beam (10), the transverse beam (10) being integrated in the machine stand (1, 2) and being securely and permanently anchored in the cast mineral module on the motor side and preferably being constructed as a metal profile.

2. Wide grinding machine according to claim 1, **characterised in that** the transverse beam (10) is constructed as a tubular beam and, at least on the drive side, comprises a cast non-metallic filling, in particular a cast mineral filling, to form the mass for the best possible vibration damping through to the connection of machine stand (1, 2) and transverse beam (10).

3. Wide grinding machine according to claim 1 or 2, **characterised in that**, on the motor side, the cast mineral module is constructed so as to be more massive locally than the other stand components, to increase the formation of mass.

4. Wide grinding machine according to any of claims 1 to 3, **characterised in that** one machine stand lower part (61, 62) and one machine stand upper part (60, 63) respectively are constructed so as to be mutually opposed.

5. Wide grinding machine according to any of claims 1 to 4, **characterised in that** the cast mineral module as a whole incorporates the motor side, the operating side and the longitudinal side and forms an integral mineral casting.

6. Wide grinding machine according to claim 5, **characterised in that** a stand lower part (1) and a stand upper part (2) comprise two mutually opposed cast mineral modules.

7. Wide grinding machine according to any of claims 1 to 4, **characterised in that** the motor side and the operating side of the machine stand (1, 2) are each constructed as a cast mineral module and are connected to two longitudinal walls (14, 15), the longitudinal walls (14, 15) being produced from metal or from cast mineral.

8. Wide grinding machine according to any of claims 1 to 4, **characterised in that** the machine stand (1, 2) is modular *per se* and at least one part module in the region of the operating side and/or motor side is produced from cast mineral.

9. Wide grinding machine according to claim 8, **characterised in that** one respective module is formed with the operating side or motor side, each with arms or longitudinal sides (23, 24) of unequal length.

10. Wide grinding machine according to claims 1 to 9, **characterised in that** the cast mineral modules have a uniform height and can be cast in different lengths and/or different widths.

11. Wide grinding machine according to claim 1, **characterised in that** the longitudinal side walls (23, 24) of a cast mineral machine stand (1, 2) are constructed in a mutually opposed manner with bridgehead-like massively configured intermediate pillars (20, 20', 20''), with usable, line-like cavities.

12. Wide grinding machine according to claim 1, **characterised in that** it comprises cast mineral modules and machine stands (1, 2) of steel construction in combination.

13. Wide grinding machine according to any of claims 1 to 12, **characterised in that** the cast mineral modules are produced from resin, hardeners and mineral fillers.

14. Wide grinding machine according to any of claims 1 to 13, **characterised in that** the cast mineral modules are massively constructed, so there is substantially equilibrium with stand parts of steel construction of the prior art.

15. Wide grinding machine according to claim 1, **characterised in that** it is modular in construction in the manner of a Lego building set, with massive modular building blocks made of cast mineral, also mechanical metallic components and subassemblies for guide rollers (39, 40) or support rollers and the perpendicular, adjustable support columns (36).

16. Wide grinding machine according to claim 1, **characterised in that** a multi-head machine comprises identically shaped modules corresponding to the number of grinding heads, the cast mineral modules having a massive-limbed right parallelepiped shape with dominantly plane limiting faces.

## Revendications

1. Rectifieuse large avec au moins une tête de meule fixable à un montant de machine (1, 2) par une poutre transversale (10) et un moteur de commande (50, 51) pour la tête de meule, qui est disposé à une extrémité de la poutre transversale (10), et qui présente un raccord amovible sur l'autre extrémité par rapport au montant de machine (1, 2),
**caractérisée en ce que**
le montant de machine (1, 2) est composé d'un module en fonte minérale et d'une poutre transversale (10), moyennant quoi la poutre transversale (10) est intégrée dans le montant de machine (1, 2) et ancrée de façon permanente dans le module en fonte minérale du côté du moteur et conçue de préférence comme profil métallique.

2. Rectifieuse large selon la revendication 1,
**caractérisée en ce que**
la poutre transversale (10) est conçue comme poutre tubulaire et présente au moins du côté de la commande un revêtement de fonte non métallique pour formation de masse, plus particulièrement un revêtement de fonte minérale, pour le meilleur amortissement de vibrations possible par la combinaison de montant de machine (1, 2) et de la poutre transversale (10).

3. Rectifieuse large selon la revendication 1 ou 2,
**caractérisée en ce que**
le module en fonte minérale est conçu localement de façon massive du côté du moteur par rapport aux parties de montant restantes pour augmenter la formation de masse.

4. Rectifieuse large selon l'une quelconque des revendications 1 à 3,
**caractérisée en ce que**
chaque partie inférieure des montants de machine (61, 62) et partie supérieure des montants de machine (60, 63) sont formées de façon opposée.

5. Rectifieuse large selon l'une quelconque des revendications 1 à 4,
**caractérisée en ce que**
le module en fonte minérale comprend en un bloc le côté du moteur, le côté de commande et la longueur et forme un corps en fonte minérale d'une seule pièce.

6. Rectifieuse large selon la revendication 5,
**caractérisée en ce**
**qu'**une partie inférieure des montants (1) et une partie supérieure des montants (2) présente deux modules en fonte minérale opposés.

7. Rectifieuse large selon l'une quelconque des revendications 1 à 4,
**caractérisée en ce que**
les côtés du moteur et de commande du montant de machine (1, 2) sont formés respectivement comme module en fonte minérale et sont liés avec deux parois longitudinales (14, 15), moyennant quoi les parois longitudinales (14, 15) sont fabriquées en métal ou en fonte minérale.

8. Rectifieuse large selon l'une quelconque des revendications 1 à 4,
**caractérisée en ce que**
le montant de machine (1, 2) est conçu de façon modulaire et **en ce qu'**au moins un module partiel est fabriqué en fonte minérale dans la région du côté de commande et/ou du moteur.

9. Rectifieuse large selon la revendication 8,
**caractérisée en ce que**
chaque module est formé d'un côté de commande ou de moteur, avec chacun des montants ou côtés longitudinaux (23, 24) de longueur différente.

10. Rectifieuse large selon l'une quelconque des revendications 1 à 9,
**caractérisée en ce que**
les modules en fonte minérale présentent une hauteur uniforme et peuvent être coulés avec des longueurs différentes et/ou des largeurs différentes.

11. Rectifieuse large selon la revendication 1,
**caractérisée en ce que**
les côtés longitudinaux (23, 24) d'un montant de machine (1, 2) sont composés de fonte minérale contrairement aux supports intermédiaires (20, 20', 20") formés de façon massive en forme de tête de pont avec des espaces vides utilisables en forme de conduits.

12. Rectifieuse large selon la revendication 1,
**caractérisée en ce**
**qu'**elle présente une combinaison module en fonte minérale et montants de machine (1, 2) en construction métallique.

13. Rectifieuse large selon l'une quelconque des revendications 1 à 12,
**caractérisée en ce que**
les modules en fonte minérale sont fabriqués en résine, durcisseurs et charges minérales.

14. Rectifieuse large selon l'une quelconque des revendications 1 à 13,
**caractérisée en ce que**
les modules en fonte minérale sont construit de façon massive, de sorte qu'un équilibre soit créé pour les parties de support en construction métallique de l'état de la technique.

15. Rectifieuse large selon la revendication 1,
**caractérisée en ce**
**qu'**elle est construite de façon modulaire comme un jeu de pièces de lego avec des éléments modulaires fixes en fonte, des éléments métalliques mécaniques et des ensembles de pièces pour des galets de guidage (39, 40) ou des cylindres de soutien tout comme des piliers d'appui (36) verticaux réglables.

16. Rectifieuse large selon la revendication 1,
**caractérisée en ce**
**qu'**une machine à plusieurs têtes présente des modules de forme identique correspondant au nombre de têtes d'affûtage, moyennant quoi les modules en fonte minérale présentent une forme parallélépipédique divisée en masse avec des périphéries planes dominantes.
